# EUROPÄISCHE PATENTSCHRIFT

(11) **EP 2 209 992 B1**
(45) Veröffentlichungstag und Bekanntmachung des Hinweises auf die Patenterteilung: **13.02.2013**
(21) Anmeldenummer: 08804635.4
(22) Anmeldetag: 24.09.2008
(51) Int. Cl.: F04B 1/04, F04B 53/20, B60T 8/40

(54) **PUMPENELEMENT, HYDRAULIKBLOCK MIT PUMPENELEMENT SOWIE MONTAGEVERFAHREN**
PUMP ELEMENT, HYDRAULIC BLOCK WITH PUMP ELEMENT AND INSTALLATION METHOD
ÉLÉMENT DE POMPAGE, BLOC HYDRAULIQUE AVEC ÉLÉMENT DE POMPAGE, ET PROCÉDÉ DE MONTAGE

(30) Priorität: 13.11.2007 DE 102007054097
(43) Veröffentlichungstag der Anmeldung: 28.07.2010
(73) Patentinhaber: Robert Bosch GmbH, 70442 Stuttgart (DE)
(72) Erfinder: KATHAN, Nicole, 88299 Leutkirch (DE); HERMANNS, Ludger, 87549 Rettenberg (DE); ZIMMERMANN, Marc, 71720 Oberstenfeld (DE)
(86) Internationale Anmeldenummer: PCT/EP2008/062723
(87) Internationale Veröffentlichungsnummer: WO 2009/062776

(56) Entgegenhaltungen:
- EP-A- 1 022 467
- WO-A-2004/088137
- DE-A1- 19 854 716
- DE-A1- 19 918 127

## Beschreibung

### Stand der Technik

Die Erfindung betrifft ein Pumpenelement zur Montage in einer Pumpenbohrung eines Hydraulikblocks gemäß dem Oberbegriff des Anspruchs 1, einen Hydraulikblock für eine Bremsanlage eines Kraftfahrzeugs gemäß Anspruch 8 sowie ein Montageverfahren für ein Pumpenelement gemäß Anspruch 9. Ein Pumpelement mit den Merkmalen gemäß dem Oberbegriff des Anspruchs 1 ist aus dem Dokument WO 2004/088137 A1 bekannt.

In einem Hydraulikblock aufgenommene Kolbenpumpen werden in hydraulischen Fahrzeugbremsanlagen von Kraftfahrzeugen eingesetzt und häufig als Rückförderpumpen bezeichnet. Sie dienen bei einer Schlupfregelung dazu, den Bremsdruck in den Radbremszylindern wahlweise abzusenken oder zu erhöhen, um den Bremsdruck in den Radbremszylindern regeln zu können.

Bekannte Kolbenpumpen besitzen ein Pumpenelement, welches zunächst montiert werden muss, bevor es in einer Pumpenbohrung eines Hydraulikblocks festgelegt werden kann. Bei bekannten Pumpenelementen erfolgt als letzter Montageschritt vor der Montage des Pumpenelementes in der Pumpenbohrung des Hydraulikblocks das Fügen einer vormontierten ein Einlassventil aufweisenden Kolbenbaugruppe und einer vormontierten Auslassventilbaugruppe. Die beiden, auf separaten Montagebändern montierten Baugruppen werden mittels eines Filterelementes aneinander festgelegt, wobei das Filterelement einen Abschnitt der Kolbenbaugruppe radial außen umschließt und an einem Zylinderelement der Auslassventilbaugruppe festgelegt wird.

Nachteilig bei dem bekannten Pumpenelement bzw. dem Montageverfahren zur Montage des bekannten Pumpenelementes ist, dass mindestens zwei Montagebänder benötigt werden, um die beiden Baugruppen separat zu montieren. Zudem ist die Montage aufwändig, da eine Vielzahl von Pressverbunden hergestellt werden müssen, damit die voneinander separaten Baugruppen stabile, nicht auseinanderfallende Einheiten bilden. Beispielsweise muss bei der Kolbenbaugruppe ein Pressverbund zwischen einer am Pumpenkolben mittels eines Presssitzes festgelegten Hochdruckdichtung und einem Einlassventildeckel realisiert werden.

### Offenbarung der Erfindung

### Technische Aufgabe

Der Erfindung liegt die Aufgabe zugrunde, ein Pumpenelement vorzuschlagen, welches einfach, vorzugsweise in einer reinen Vorwärtsrichtung zu montieren ist. Ferner besteht die Aufgabe darin, einen Hydraulikblock mit einem entsprechend optimierten Pumpenelement vorzuschlagen. Weiterhin besteht die Aufgabe darin, ein vereinfachtes Montageverfahren zur Montage eines Pumpenelementes vorzuschlagen.

### Technische Lösung

Diese Aufgabe wird hinsichtlich des Pumpenelementes mit den Merkmalen des Anspruchs 1, hinsichtlich des Hydraulikblocks mit den Merkmalen des Anspruchs 8 und hinsichtlich des Montageverfahrens mit den Merkmalen des Anspruchs 9 gelöst.

Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren offenbarten Merkmalen. Zur Vermeidung von Wiederholungen sollen rein vorrichtungsgemäß offenbarte Merkmale auch als verfahrensgemäß offenbart gelten und beanspruchbar sein. Ebenso sollen rein verfahrensgemäß offenbarte Merkmale auch als vorrichtungsgemäß offenbart gelten und beanspruchbar sein.

Der Erfindung liegt der Gedanke zugrunde, die Hochdruckdichtung nicht mehr als von dem Einlassventildeckel separates Bauteil auszubilden, sondern einteilig mit dem Einlassventildeckel auszubilden, so dass die Hochdruckdichtung einen, vorzugsweise dem Pumpenkolben zugewandten, Abschnitt des Einlassventildeckels bildet. Wesentlich ist, dass der Einlassventildeckel, vorzugsweise mit seinem Hochdruckdichtungsabschnitt, mithilfe der Rückstellfeder für den Pumpenkolben, die auf den Einlassventildeckel, vorzugsweise unmittelbar auf den Hochdruckdichtungsabschnitt, einwirkt, in axialer Richtung gegen ein Ventilsitzelement gepresst wird. Im Gegensatz zu den bekannten Pumpenelementen ist das Ventilsitzelement gemäß der Erfindung als ein von dem Pumpenkolben separates Bauteil ausgebildet und besteht bevorzugt aus Kunststoff. Insbesondere handelt es sich um ein Spritzgussteil. Damit das Pumpenelement nach seiner Montage und vor dem Einbringen in die Pumpenbohrung eine stabile Einheit bildet, deren Bauteile fest zusammengehalten werden, derart, dass ein unbeabsichtigtes Lösen von Bauteilen vor oder während der Montage vermieden wird, ist gemäß der Erfindung vorgesehen, dass der Pumpenkolben, zumindest vor der Montage des Pumpenelementes in der Pumpenbohrung, kraftschlüssig mit dem Ventilsitzelement verbunden ist.

Anders ausgedrückt ist das Ventilsitzelement an dem Pumpenkolben festgelegt, so dass der Pumpenkolben auf Zug belastet werden kann, ohne dass sich (unmittelbar) der Pumpenkolben von dem Ventilsitzelement löst. Um bei einem derart ausgebildeten Pumpenelement eine Montage der Bauteile des Pumpenelementes in axialer Richtung zu ermöglichen, ohne die Notwendigkeit, zunächst zwei separate Baugruppen montieren und diese anschließend zusammenführen zu müssen, ist ein wesentliches Merkmal eines nach dem Konzept der Erfindung ausgebildeten Pumpenelementes, dass an dem Hochdruckdichtungsabschnitt und/oder an dem Ventilsitzelement Zentriermittel vorgesehen sind, die eine erleichterte Findung der Bauteile relativ zueinander ermöglichen. Bevorzugt ragt dabei das Ventilsitzelement nach seiner Montage in axialer Richtung in den Einlassventildeckel bzw. in den Hochdruckdichtungsabschnitt des Einlassventildeckels hinein.

Ein nach dem Konzept der Erfindung ausgebildetes Pumpenelement weist gegenüber bekannten Pumpenelementen für hydraulische Bremsanlagen erhebliche Vorteile auf. So kann die Montageanlagenkomplexität reduziert werden, da ein nach dem Konzept der Erfindung ausgebildetes Pumpenelement vollständig in Vorwärtsmontage, d.h. in axialer Richtung an einem Stück, montiert werden kann. Zudem wird eine höhere Typenflexibilität des Pumpenkolbenabschnittes des Pumpenelementes erhalten, insbesondere deshalb, weil das Ventilsitzelement ein separates, an dem Pumpenkolben festgelegtes Bauteil ist. Da auf ein Montageband verzichtet werden kann, wird der Bauraum der gesamten Montagelinie aufgrund der Erfindung reduziert. Darüber hinaus wird eine höhere Skalierbarkeit der Montagelinie erhalten. Ein nach dem Konzept der Erfindung ausgebildetes Pumpenelement ist zudem als Ganzes schüttgutfähig. Ein wesentlicher Vorteil eines erfindungsgemäßen Pumpenelementes besteht darin, dass Zwischenmontageschritte und Unterbaugruppen entfallen und dass die Montageschritte als solche vereinfacht sind. Darüber hinaus sind die Herstellungskosten für ein nach dem Konzept der Erfindung ausgebildetes Pumpenelement im Vergleich zu bekannten Pumpenelementen deutlich reduziert.

Von Vorteil ist eine Ausführungsform des Pumpenelementes, bei der der Einlassventildeckel, insbesondere dessen Hochdruckdichtungsabschnitt, ausschließlich an dem Ventilsitzelement anliegt. Anders ausgedrückt ist eine Ausführungsform, insbesondere für die Realisierung einer Vorwärtsmontage des gesamten Pumpenelementes, von Vorteil, bei der auf eine kraftschlüssige Verbindung zwischen dem Einlassventildeckel und dem Ventilsitzelement verzichtet wird. Noch anders ausgedrückt ist in Weiterbildung der Erfindung vorgesehen, dass der Einlassventildeckel fixierfrei an dem Ventilsitzelement anliegt, so dass die Verbindung (reine Anlage) aus Einlassventildeckel und Ventilsitzelement keine Zugkräfte aufnehmen kann. Auf diese Weise wird auf einen Pressverbund verzichtet, welcher bei einer Vorwärtsmontage problematisch wäre, da das Widerlager zum Aufbringen einer Gegenkraft zur Realisierung eines beanspruchbaren Pressverbundes bei einer reinen Vorwärtsmontage die Rückstellfeder für den Pumpenkolben sein müsste.

Von besonderem Vorteil ist eine Ausführungsform des Pumpenelementes, bei der die Zentriermittel, mit denen das Ventilsitzelement relativ zu dem Einlassventildeckel zentrierbar ist, mindestens eine Fase umfassen. Vorzugsweise ist diese Fase an einem dem Einlassventildeckel zugewandten Endbereich des Ventilsitzelementes angebracht, wobei die Fase zur erleichterten Findung eines Aufnahmeabschnitts im Einlassventildeckel dient, der von einem, vorzugsweise umlaufenden, Umfangswandabschnitt des Einlassventildeckels bzw. des Hochdruckdichtungsabschnittes gebildet ist.

Besonders bevorzugt ist eine Ausführungsform, bei der das Einlassventil und der an dem Ventilsitz des Einlassventils festgelegte Pumpenkolben mittels eines Filterelementes an einem Zylinderelement gehalten werden, wobei das Zylinderelement die Rückstellfeder für den Pumpenkolben in sich aufnimmt. Die Rückstellfeder stützt sich in axialer Richtung an dem Einlassventildeckel, vorzugsweise an dessen Hochdruckdichtungsabschnitt, ab und presst somit den Einlassventildeckel gegen das Ventilsitzelement. Dieses wiederum wird aufgrund der Federkraft der Rückstellfeder axial gegen ein Filterelement gepresst, vorzugsweise gegen einen Bodenabschnitt des Filterelementes, wobei das Filterelement diese Federkraft aufnimmt, da es am Zylinderelement, vorzugsweise mittels einer Rastverbindung, gehalten ist.

Zur Ausbildung der kraftschlüssigen Verbindung zwischen dem Ventilsitzelement und dem Pumpenkolben gibt es unterschiedlichste Realisierungsmöglichkeiten. Bevorzugt ist eine Ausführungsform, bei der der Pumpenkolben in einer Aufnahme des Ventilsitzelementes aufgenommen ist und ein Klemmverbund realisiert ist. Besonders bevorzugt ist es, wenn dieser Klemmverbund zwischen dem Pumpenkolben und dem Ventilsitzelement über eine Radialkraftkomponente realisiert ist, die aus der Federkraftbeaufschlagung des Ventilsitzelementes in axialer Richtung und dem relativ aneinander Abstützen des Filterelementes und des Ventilsitzelementes an mindestens einer schrägen Kontaktfläche resultiert. Aus der Axialkraftbeaufschlagung mittels der Rückstellfeder resultiert somit eine radial nach innen gerichtete Anpresskraft, mit der ein umlaufender, vorzugsweise aus mehreren, insbesondere flexiblen, Teilabschnitten bestehender, Umfangswandabschnitt in radialer Richtung nach innen an die Umfangswand des Pumpenkolbens gepresst wird.

Unabhängig von der zuvor beschriebenen Befestigungsvariante kann zusätzlich oder alternativ ein Pressverbund zwischen dem Pumpenkolben und dem Ventilsitzelement realisiert werden. Beispielsweise können der Pumpenkolben und das Ventilsitzelement hierzu in axialer Richtung ineinanderragen, wobei die Gegenkraft beim axialen Fügen durch die Rückstellfeder für den Pumpenkolben zur Verfügung gestellt wird. Zusätzlich oder alternativ wird der Pumpenkolben in radialer Richtung mit dem Ventilsitzelement kraftschlüssig verbunden. Die Gegenkraft beim radialen Pressen kann dabei durch eine Montagezange realisiert werden, die das Ventilsitzelement in radialer Richtung nach innen kraftbeaufschlagt. Eine mögliche Ausführungsform sieht vor, den Pressverbund in einer separaten Montageeinheit zu montieren und nachfolgend das dann aus Pumpenkolben und Ventilsitzelement bestehende Bauteil vorwärts auf den Einlassventildeckel zu montieren. Bevorzugt ist jedoch eine Ausführungsform, bei der die Montage sämtlicher Bauteile des Pumpenelementes in Vorwärtsmontage, d.h. in axialer Richtung nacheinander, erfolgt.

Anstelle eines Pressverbundes kann auch ein Klebeverbund zwischen dem Pumpenkolben und dem Ventilsitzelement realisiert werden. Dabei kann der Pumpenkolben axial und/oder radial durch Klebstoff mit dem Ventilsitzelement verbunden werden.

Ferner führt die Erfindung auf einen Hydraulikblock für eine Bremsanlage eines Kraftfahrzeugs, wobei ein zuvor beschriebenes Pumpenelement in einer Pumpenbohrung innerhalb des Hydraulikblocks aufgenommen ist und mit Vorteil mit einem rotierbaren Exzenter zusammenwirkt. Dabei verläuft die Drehachse des Exzenters bevorzugt rechtwinklig zur Längsmittelachse des Pumpenkolbens. Bevorzugt liegt das Ventilsitzelement bei in der Pumpenbohrung aufgenommenem Pumpenelement axial nicht mehr an dem Filterelement an.

Weiterhin führt die Erfindung auch auf ein Montageverfahren für ein Pumpenelement, vorzugsweise für ein zuvor beschriebenes Pumpenelement. Das Montageverfahren umfasst dabei erfindungsgemäß die Schritte des axialen Aufschiebens des Einlassventildeckels mit daran ausgebildetem Hochdruckdichtungsabschnitt auf eine in einem insbesondere mit einem Verschlussdeckel verpressten Zylinderelement aufgenommene Rückstellfeder. Daraufhin werden in den Einlassventildeckel in axialer Richtung zunächst eine Schließfeder und daraufhin ein Schließkörper eingeführt. Daraufhin erfolgt das axiale Aufschieben eines Ventilsitzelementes auf den Einlassventildeckel, vorzugsweise auf den Hochdruckdichtungsabschnitt des Einlassventildeckels. Besonders bevorzugt ist eine Ausführungsform, bei der erst nach diesem Aufschieben des Ventilsitzelementes der Pumpenkolben in axialer Richtung montiert ist. Es ist jedoch auch eine Ausführungsform realisierbar, bei der der Pumpenkolben gemeinsam mit dem daran bereits festgelegten Ventilsitzelement in axialer Richtung an dem Einlassventildeckel zur Anlage gebracht wird.

Besonders bevorzugt ist eine Ausführungsform des Montageverfahrens, bei der sämtliche Bauteile des Pumpenelementes in Vorwärtsmontage montiert werden. Diese Ausführungsform ermöglicht es, das Montageband im Takt zu rüsten. Dies bedeutet, dass, noch während ein Pumpenelement auf einem Montageband montiert wird, bereits mit der Montage eines weiteren Pumpenelementes begonnen wird.

Besonders bevorzugt ist eine Ausführungsform des Montageverfahrens, bei der als letzter Montageschritt des Pumpenelementes vor dem Einführen des Pumpenelementes in eine Pumpenbohrung in einem Hydraulikblock ein Filterelement über den Pumpenkolben geschoben und auf ein Zylinderelement gepresst wird, derart, dass das Filterelement sich kraftschlüssig, insbesondere über eine Rastverbindung, mit dem Zylinderelement verbindet, so dass das Filterelement auf es von dem Ventilsitzelement ausgeübte Axialkräfte aufnehmen kann, wobei die Axialkräfte aus der Federkraftbeaufschlagung des Einlassventildeckels mit der Rückstellfeder resultieren.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1 bis Fig. 4:: unterschiedliche Montageschritte bei der Vorwärtsmontage eines Pumpenelementes,
- Fig. 5a:: einen Teilausschnitt des Pumpenelementes, aus dem eine mögliche, als Klemmverbund ausgebildete, kraftschlüssige Verbindung zwischen dem Pumpenkolben und dem Ventilsitzelement hervorgeht,
- Fig. 5b:: eine Detailvergrößerung aus Fig. 5a und
- Fig. 6:: einen Ausschnitt eines fertig montierten Pumpenelementes.

### Ausführungsformen der Erfindung

In den Figuren sind gleiche Bauteile und Bauteile mit der gleichen Funktion mit den gleichen Bezugszeichen gekennzeichnet.

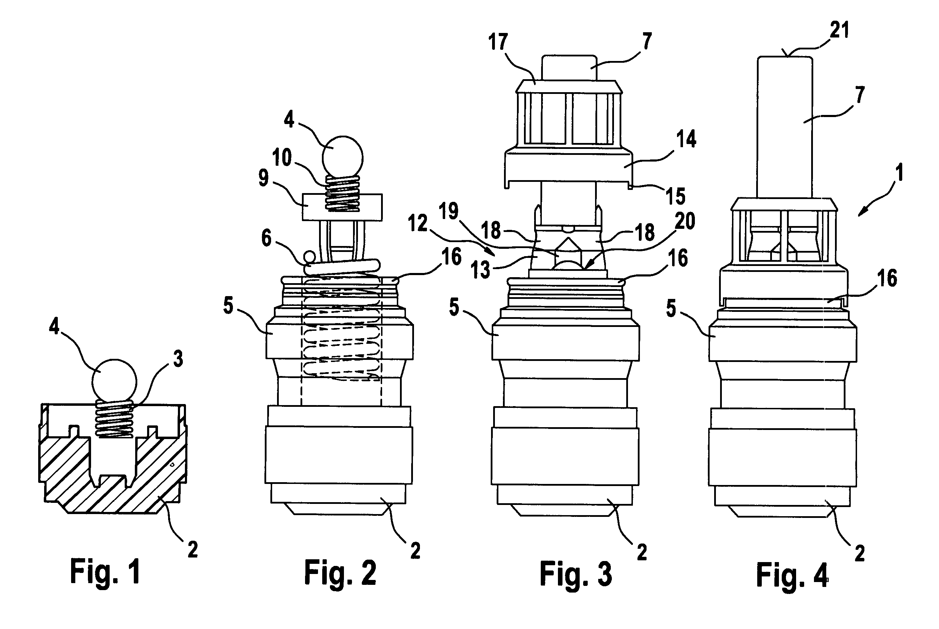

Anhand der Fig. 1 bis 4 wird im Folgenden ein optimiertes Montageverfahren beschrieben, bei dem sämtliche Bauteile eines Pumpenelementes 1 (vergleiche Fig. 4) in Vorwärtsmontage montiert werden.

Aus Fig. 1 geht hervor, dass zunächst ein Auslassventildeckel 2 auf einem nicht gezeigten Werkzeugträger platziert wird. Der Auslassventildeckel 2 wird in axialer Richtung bestückt mit einer Auslassventilschließfeder 3 und mit einem als Kugel ausgebildeten Auslassventilschließkörper 4.

Aus Fig. 2 ist ersichtlich, dass daraufhin ein Zylinderelement 5 durch Einpressen in den Auslassventildeckel 2 kraftschlüssig mit diesem verbunden wird. Daraufhin wird das Zylinderelement 5 in axialer Richtung mit einer Rückstellfeder 6 für den beispielsweise aus Fig. 4 ersichtlichen Pumpenkolben 7 bestückt. In die Rückstellfeder 6 hinein wird abschnittsweise ein topfförmiger Einlassventildeckel 8 in axialer Richtung versenkt, wobei der Einlassventildeckel 8 an seinem dem Zylinderelement 5 abgewandten Ende einen Hochdruckdichtungsabschnitt 9 aufweist, der in montiertem Zustand dichtend mit dem Innenumfang des Zylinderelementes 5 zusammenwirkt.

Nachfolgend wird der Einlassventildeckel in axialer Richtung bestückt mit einer Schließfeder 10 und einem als Kugel ausgebildeten Schließkörper 11 eines Einlassventils 12 (vergleiche Fig. 3).

Nach dem Bestücken des Einlassventildeckels 8 mit der Schließfeder 10 und dem Schließkörper 11 wird ein Ventilsitzelement 13 (vergleiche Fig. 3) in axialer Richtung auf den Einlassventildeckel aufgesetzt, woraufhin der Pumpenkolben 7 in axialer Richtung mit seinem Endabschnitt in das Ventilsitzelement 13 eingeführt und mit diesem kraftschlüssig verbunden wird. Bei einer alternativen Ausführung des Montageverfahrens wird vor dem Auflegen des Ventilsitzelementes 13 auf den Einlassventildeckel 8 der Pumpenkolben 7 in einer separaten Montageeinrichtung kraftschlüssig mit dem Ventilsitzelement 13 verbunden.

Als letzter Montageschritt wird ein hülsenförmiges Filterelement 14 in axialer Richtung auf den Pumpenkolben 7 aufgeschoben und mithilfe von Rasthaken 15 formschlüssig an einem Bund 16 des Zylinderelementes 5 festgelegt. Die Rückstellfeder 6 beaufschlagt im montierten Zustand das Ventilsitzelement 13 in axialer Richtung gegen einen Bodenabschnitt 17 des Filterelementes 14, welches diese Axialkraft aufnehmen kann, da es über die Rasthaken 15 formschlüssig mit dem Zylinderelement 5 verbunden ist.

In Fig. 3 sind Querkanäle 18 im Ventilsitzelement 13 gezeigt, die mit dem Grund des zentrischen Sackloches 19 im Ventilsitzelement 13 kommunizieren. In den nicht gezeigten Hydraulikblock strömt Kraftstoff in radialer Richtung nach innen durch das Filterelement 14 zu den Querkanälen 18 und durch diese hindurch zu dem Sackloch 19 und durch dieses in axialer Richtung zum Schließkörper 11. Wie aus Fig. 3 ersichtlich ist, ist der stirnseitige Ventilsitz 20 des Einlassventils 12, welcher am Ventilsitzelement 13 ausgebildet ist, als innenkonusförmiger Ventilsitz ausgeformt.

Das nach der Montage erhaltene, in Fig. 4 gezeigte Pumpenelement 1 ist schüttgutfähig. Das Pumpenelement 1 kann in einer Pumpenbohrung eines Hydraulikblocks aufgenommen werden. Innerhalb des Hydraulikblocks wirkt die freie Stirnseite 21 des Pumpenkolbens 7 mit einem drehbar angetriebenen Exzenter zusammen, der den Pumpenkolben 7 zu einer axialen Hubbewegung antreibt, wobei die Rückstellfeder 6 für eine entsprechende axiale Rückbewegung sorgt. Der nicht gezeigte, an sich bekannte Hydraulikblock enthält neben dem Pumpenelement 1 weitere, nicht dargestellte Bauteile einer Schlupfregelung einer hydraulischen Fahrzeugbremsanlage, wie Magnetventile, Rückschlagventile und Hydrospeicher, die miteinander verschaltet sind. Der Hydraulikblock bildet ein Pumpengehäuse für das Pumpenelement 1.

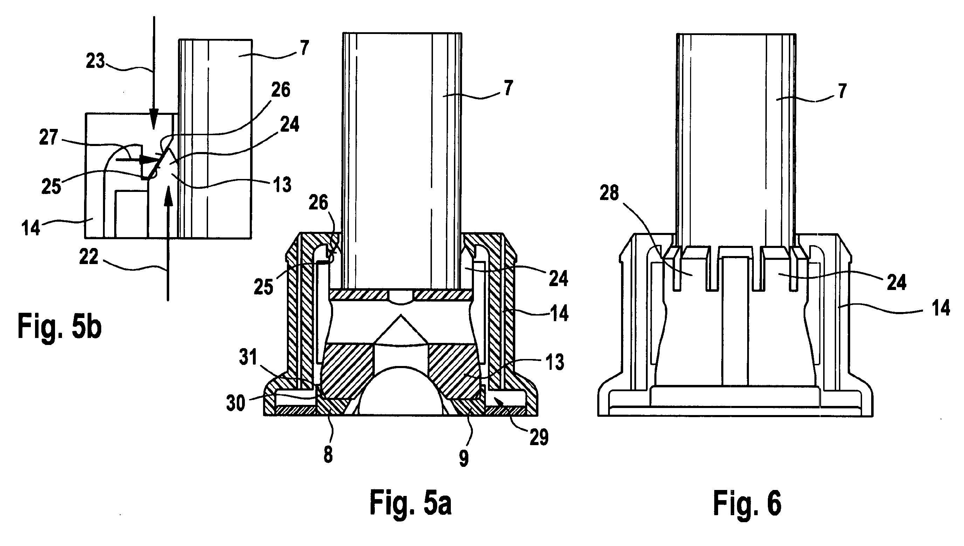

In den Fig. 5a und 5b ist in Schnittdarstellungen jeweils ein Ausschnitt eines montierten Pumpenelementes 1 gezeigt, wobei aus den Fig. 5a und 5b eine mögliche, als Klemmverbund ausgebildete, kraftschlüssige Verbindung zwischen dem Pumpenkolben 7 und dem Ventilsitzelement 13 zu entnehmen ist. Alternative, im allgemeinen Beschreibungsteil erläuterte, kraftschlüssige Verbindungen sind alternativ oder zusätzlich realisierbar.

Aus den Fig. 5a und 5b ist durch einen Pfeil 22 die von der Rückstellfeder auf das Ventilsitzelement 13 ausgeübte Axialkraft angedeutet. Dieser Axialkraft wirkt eine Haltekraft 23 entgegen, die aus der kraftschlüssigen Verbindung des Filterelementes 14 mit dem Zylinderelement 5 resultiert. An einem ringförmigen Axialfortsatz 24 (Umfangswandabschnitt) ist radial außen eine schräge Kontaktfläche 25 angeordnet, die mit einer formkongruenten schrägen Kontaktfläche 26 am radial außen befindlichen Filterelement 14 zusammenwirkt. Aufgrund der schrägen Abstützung des Ventilsitzelementes 13 und des Filterelementes 14 aneinander entsteht eine Radialkraftkomponente 27, die den Axialfortsatz 24 radial nach innen gegen den Pumpenkolben 7 kraftbeaufschlagt. Der Pumpenkolben 7 wird also in radialer Richtung geklemmt (Klemmverbund).

Aus Fig. 5a ist zu erkennen, dass Zentriermittel 29 vorgesehen sind, mit denen das Ventilsitzelement 13 relativ zu den Einlassventilen/deckel 8 zentrierbar ist. Die Zentriermittel 29 umfassen eine umlaufende, endseitige Fase 30 am Ventilsitzelement 13, wobei die Fase mit einem in axialer Richtung weisenden Unterwandabschnitt 31 des Hochdruckdichtungsabschnitts 9 des Ventilsitzelementes 13 zusammenwirkt.

Wie aus Fig. 6 ersichtlich ist, ist der Axialfortsatz 24 (Umfangswandabschnitt) von mehreren in Umfangsrichtung beabstandeten Teilabschnitten 28 gebildet, die radial außen eine schräge Kontaktfläche 25 aufweisen, die mit einer entsprechenden Kontaktfläche 26 des Filterelementes 14 zusammenwirkt, so dass die Teilabschnitte 28 federelastisch nach radial innen auf den Pumpenkolben 7 verstellt werden.

## Patentansprüche

1. Pumpenelement zur Montage in einer Pumpenbohrung eines Hydraulikblocks, mit einem Zylinderelement (5) in dem, ein Pumpenkolben (7), eine Rückstellfeder (6) für den Pumpenkolben (7), und ein Einlassventil (12) mit einem Einlassventildeckel (8), in dem eine Schließfeder (10) und ein Schließkörper (11) angeordnet sind, aufgenommen sind,
**dadurch gekennzeichnet,**
**dass** der Pumpenkolben (7) frei von druckmittelführenden Kanälen ist,
**dass** der Einlassventildeckel (8) einen Hochdruckdichtungsabschnitt (9) aufweist,
der an einem, zumindest vor der Montage des Pumpenelementes (1) in der Pumpenbohrung, *kraftschlüssig* mit dem Pumpenkolben (7) verbundenen und die druckmittelführenden Kanäle (18, 19) des Pumpenelements (1) aufweisenden Ventilsitzelement (13) durch die Rückstellfeder (6) federkraftunterstützt in axialer Richtung anliegt, und dass Zentriermittel (29) zur Zentrierung des Einlassventildeckels (8) relativ zu dem Ventilsitzelement (13) vorgesehen sind.

2. Pumpenelement nach Anspruch 1,
**dadurch gekennzeichnet,**
**dass** zwischen dem Einlassventildeckel (8) und dem Ventilsitzelement (13) keine Zugkräfte aufnehmende kraftschlüssige Verbindung vorgesehen ist.

3. Pumpenelement nach einem der Ansprüche 1 oder 2,
**dadurch gekennzeichnet,**
**dass** die Zentriermittel (29) mindestens eine Fase (30), vorzugsweise am Ventilsitzelement (13), umfassen.

4. Pumpenelement nach einem der vorhergehenden Ansprüche,
**dadurch gekennzeichnet,**
**dass** die Rückstellfeder (6) das Ventilsitzelement (13), vor der Montage des Pumpenelementes (1) in der Pumpenbohrung, axial gegen ein Filterelement (14) beaufschlagt, in das der Pumpenkolben (7) axial hineinragt und welches, vorzugsweise formschlüssig, insbesondere mittels einer Rastverbindung mit einem Zylinderelement (5) verbunden ist, das die Rückstellfeder (6) zumindest abschnittsweise umschließt.

5. Pumpenelement nach Anspruch 4,
**dadurch gekennzeichnet,**
**dass** die kraftschlüssige Verbindung zwischen dem Ventilsitzelement (13) und dem Pumpenkolben (7) zumindest teilweise, vorzugsweise vollständig, über eine Radialkraftkomponente (27) realisiert ist, die aus einer schrägen Kontaktfläche (25, 26) zwischen dem Ventilsitzelement (13) und dem Filterelement (14) sowie der axialen Federkraftbeaufschlagung des Ventilsitzelementes (13) durch die Rückstellfeder (6) resultiert.

6. Pumpenelement nach einem der vorhergehenden Ansprüche,
**dadurch gekennzeichnet,**
**dass** die kraftschlüssige Verbindung zwischen dem Pumpenkolben (7) und dem Ventilsitzelement (13) einen Pressverbund umfasst.

7. Pumpenelement nach einem der vorhergehenden Ansprüche,
**dadurch gekennzeichnet,**
**dass** die kraftschlüssige Verbindung zwischen dem Pumpenkolben (7) und dem Ventilsitzelement (13) einen Klebeverbund umfasst.

8. Hydraulikblock für eine Bremsanlage eines Kraftfahrzeugs mit einem in einer Pumpenbohrung aufgenommenen Pumpenelement (1) nach einem der vorhergehenden Ansprüche.

9. Montageverfahren für ein Pumpenelement nach einem der Ansprüche 1 bis 7,
**gekennzeichnet durch** die Schritte:
● Axiales Aufschieben eines Einlassventildeckels (8) mit einem Hochdruckdichtungsabschnitt (9) auf eine bereits montierte Rückstellfeder (6) für einen Pumpenkolben (7), und
● danach axiales Einführen einer Schließfeder (10) und eines Schließkörpers (11) in den Einlassventildeckel (8), und
● danach axiales Aufschieben eines Ventilsitzelementes (13) auf den Einlassventildeckel (8).

10. Montageverfahren nach Anspruch 9,
**dadurch gekennzeichnet,**
**dass** sämtliche Bauteile des Pumpenelementes (1) in axialer Richtung nacheinander montiert werden.

11. Montageverfahren nach einem der Ansprüche 9 oder 10,
**dadurch gekennzeichnet,**
**dass** als letzter Montageschritt des Pumpenelementes (1) vor dem Einführen des Pumpenelementes (1) in eine Pumpenbohrung in einem Hydraulikblock ein Filterelement (14) über den Pumpenkolben (7) geschoben und kraftschlüssig an einem die Rückstellfeder (6) zumindest abschnittsweise umschließenden Zylinderelement (5) festgelegt wird.

## Claims

1. Pump element for installation in a pump bore of a hydraulic block, with a cylinder element (5) which accommodates a pump piston (7), a return spring (6) for the pump piston (7) and an inlet valve (12) with an inlet-valve cover (8) in which a closing spring (10) and a closing body (11) are arranged, **characterized in that** the pump piston (7) is free of pressure-medium-carrying ducts, **in that** the inlet-valve cover (8) has a high-pressure sealing portion (9) which, assisted with spring force by the return spring (6), bears in the axial direction against a valve-seat element (13) connected non-positively to the pump piston (7), at least before the installation of the pump element (1) in the pump bore, and having the pressure-medium-carrying ducts (18, 19) of the pump element (1), and **in that** centring means (29) for centring the inlet-valve cover (8) in relation to the valve-seat element (13) are provided.

2. Pump element according to Claim 1, **characterized in that** no non-positive connection absorbing tensile force is provided between the inlet-valve cover (8) and the valve-seat element (13).

3. Pump element according to either one of Claims 1 and 2, **characterized in that** the centring means (29) comprise at least one chamfer (30), preferably on the valve-seat element (13).

4. Pump element according to one of the preceding claims, **characterized in that**, before the installation of the pump element (1) in the pump bore, the return spring (6) loads the valve-seat element (13) axially against a filter element (14), into which the pump piston (7) projects axially and which is connected preferably positively, in particular by means of a latching connection, to a cylinder element (5) which at least partially surrounds the return spring (6).

5. Pump element according to Claim 4, **characterized in that** the non-positive connection between the valve-seat element (13) and the pump piston (7) is implemented at least partially, preferably completely, via a radial-force component (27) which results from an oblique contact surface (25, 26) between the valve-seat element (13) and the filter element (14) and from the loading of the valve-seat element (13) axially with spring force by the return spring (6).

6. Pump element according to one of the preceding claims, **characterized in that** the non-positive connection between the pump piston (7) and the valve-seat element (13) comprises a press fit.

7. Pump element according to one of the preceding claims, **characterized in that** the non-positive connection between the pump piston (7) and the valve-seat element (13) comprises an adhesive bond.

8. Hydraulic block for a brake system of a motor vehicle, with a pump element (1) according to one of the preceding claims which is accommodated in a pump bore.

9. Installation method for a pump element according to one of Claims 1 to 7, **characterized by** the steps:
● pushing of an inlet-valve cover (8) axially with a high-pressure sealing portion (9) onto an already installed return spring (6) for a pump piston (7), and
then, axial introduction of a closing spring (10) and of a closing body (11) into the inlet-valve cover (8), and
● then, pushing of a valve-seat element (13) axially onto the inlet-valve cover (8).

10. Installation method according to Claim 9, **characterized in that** all the components of the pump element (1) are mounted in succession in the axial direction.

11. Installation method according to either one of Claim 9 or 10, **characterized in that**, as the last step for installing the pump element (1) before the introduction of the pump element (1) into a pump bore in a hydraulic block, a filter element (14) is pushed over the piston (7) and is secured non-positively to a cylinder element (5) at least partially surrounding the return spring (6).

## Revendications

1. Elément de pompe pour le montage dans un alésage de pompe d'un bloc hydraulique, comprenant un élément de cylindre (5) dans lequel sont reçus un piston de pompe (7), un ressort de rappel (6) pour le piston de pompe (7), et une soupape d'entrée (12) avec un couvercle de soupape d'entrée (8), dans lequel sont disposés un ressort de fermeture (10) et un corps de fermeture (11),
**caractérisé en ce que**
le piston de pompe (7) est exempt de canaux de guidage de fluide sous pression,
**en ce que** le couvercle de soupape d'entrée (8) présente une portion d'étanchéité haute pression (9) qui s'applique dans la direction axiale, avec assistance par la force de ressort du ressort de rappel (6), contre un élément de siège de soupape (13) connecté par force au piston de pompe (7) au moins avant le montage de l'élément de pompe (1) dans l'alésage de pompe et présentant les canaux de guidage de fluide sous pression (18, 19) de l'élément de pompe (1), et **en ce que** des moyens de centrage (29) sont prévus pour centrer le couvercle de soupape d'entrée (8) par rapport à l'élément de siège de soupape (13).

2. Elément de pompe selon la revendication 1,
**caractérisé en ce**
**qu'**entre le couvercle de soupape d'entrée (8) et l'élément de siège de soupape (13) n'est prévue aucune connexion par engagement par force recevant des forces de traction.

3. Elément de pompe selon l'une quelconque des revendications 1 ou 2,
**caractérisé en ce que**
les moyens de centrage (29) comprennent au moins un biseau (30), de préférence sur l'élément de siège de soupape (13).

4. Elément de pompe selon l'une quelconque des revendications précédentes,
**caractérisé en ce que**
le ressort de rappel (6) sollicite l'élément de siège de soupape (13) avant le montage de l'élément de pompe (1) dans l'alésage de pompe,
axialement contre un élément de filtre (14), dans lequel pénètre axialement le piston de pompe (7), et qui est connecté, de préférence par engagement par correspondance géométrique, notamment au moyen d'une connexion par encliquetage, à un élément de cylindre (5) qui entoure au moins en partie le ressort de rappel (6).

5. Elément de pompe selon la revendication 4,
**caractérisé en ce que**
la connexion par engagement par force entre l'élément de siège de soupape (13) et le piston de pompe (7) est réalisée au moins en partie, de préférence complètement par le biais d'un composant à force radiale (27) qui résulte d'une surface de contact oblique (25, 26) entre l'élément de siège de soupape (13) et l'élément de filtre (14) ainsi que de la sollicitation par force de ressort de l'élément de siège de soupape (13) par le ressort de rappel (6).

6. Elément de pompe selon l'une quelconque des revendications précédentes,
**caractérisé en ce que**
la connexion par engagement par force entre le piston de pompe (7) et l'élément de siège de soupape (13) comprend un assemblage par pressage.

7. Elément de pompe selon l'une quelconque des revendications précédentes,
**caractérisé en ce que**
la connexion par engagement par force entre le piston de pompe (7) et l'élément de siège de soupape (13) comprend un assemblage par collage.

8. Bloc hydraulique pour une installation de frein d'un véhicule automobile comprenant un élément de pompe (1) reçu dans un alésage de pompe selon l'une quelconque des revendications précédentes.

9. Procédé de montage pour un élément de pompe selon l'une quelconque des revendications 1 à 7, **caractérisé par** les étapes suivantes :
- déplacement axial d'un couvercle de soupape d'entrée (8) avec une section d'étanchéité haute pression (9) sur un ressort de rappel déjà monté (6) pour un piston de pompe (7), et
- ensuite introduction axiale d'un ressort de fermeture (10) et d'un corps de fermeture (11) dans le couvercle de soupape d'entrée (8), et
- ensuite déplacement axial d'un élément de siège de soupape (13) sur le couvercle de soupape d'entrée (8).

10. Procédé de montage selon la revendication 9,
**caractérisé en ce que**
tous les composants de l'élément de pompe (1) sont montés les uns derrière les autres dans la direction axiale.

11. Procédé de montage selon l'une quelconque des revendications 9 ou 10,
**caractérisé en ce**
**qu'**un élément de filtre (14) est poussé sur le piston de pompe (7) en tant que dernière étape de montage de l'élément de pompe (1) avant l'introduction de l'élément de pompe (1) dans un alésage de pompe dans un bloc hydraulique, et l'élément de filtre est fixé par engagement par force sur un élément de cylindre (5) entourant au moins en partie le ressort de rappel (6).
